# EUROPÄISCHE PATENTSCHRIFT

(11) **EP 2 155 482 B1**
(45) Veröffentlichungstag und Bekanntmachung des Hinweises auf die Patenterteilung: **06.04.2011**
(21) Anmeldenummer: 08736410.5
(22) Anmeldetag: 21.04.2008
(51) Int. Cl.: B29D 30/48

(54) **VERFAHREN ZUM AUFWICKELN UND SPLEISSEN EINES KERNPROFILES FÜR EINEN FAHRZEUGREIFEN MIT EINER WICKELTROMMEL**
METHOD FOR WINDING AND SPLICING A CORE PROFILE FOR A VEHICLE TIRE WITH A WINDING DRUM
PROCÉDÉ DESTINÉ À ENROULER ET ÉPISSER UN PROFILÉ DOTÉ D'UNE ÂME DESTINÉ À UN PNEUMATIQUE DE VÉHICULE, AU MOYEN D'UN CYLINDRE D'ENROULEMENT

(30) Priorität: 15.06.2007 DE 102007027557
(43) Veröffentlichungstag der Anmeldung: 24.02.2010
(73) Patentinhaber: Continental Reifen Deutschland GmbH, 30165 Hannover (DE)
(72) Erfinder: GERIGHAUSEN, Martin, Barsinghausen 30890 (DE)
(74) Vertreter: Finger, Karsten
(86) Internationale Anmeldenummer: PCT/EP2008/054786
(87) Internationale Veröffentlichungsnummer: WO 2008/151875

(56) Entgegenhaltungen:
- EP-A- 0 310 417
- EP-A- 0 429 213
- EP-A- 0 430 519
- EP-A- 1 010 651
- WO-A-01/17762
- DE-A1-102004 024 715
- JP-A- 8 025 510
- US-A- 4 844 768
- US-A- 5 486 261

## Beschreibung

Die Erfindung betrifft ein Verfahren zum Aufwickeln und Spleißen eines Kernprofiles für einen Fahrzeugreifen mit einer Wickeltrommel.

Bei der Reifenherstellung werden Reifenaufbauteile auf eine Wickeltrommel aufgewickelt und anschließend zu einem ringförmigen Bauteil zusammengespleißt. In der US 3,895,986 ist zum Beispiel ein Aufwickeln eines Kernprofiles dargestellt, wobei diese Druckschrift die Herstellung eines Kernverbandes aus Kernprofil und Wulstkern betrifft. Beim Wickeln und dem anschließenden automatischen Spleißen von streifenförmigen Reifenbauteilen tritt immer wieder das Problem auf, dass das Material nach dem Ablängen des Materialstreifens eine unkontrollierte Deformation und Schrumpfung erfährt, wodurch ein automatischer Spleiß mit einer hohen Qualität verhindert wird.

Weitere Verfahren zum Spleißen von Reifen aufbauteilen auf einer Wickeltrommel sind in den Dokumenten JP 08 025 510 A, EP 1 010 651 A, EP 0 310 417 A und US 4,844,768 offenbart.

Der Erfindung lag die Aufgabe zugrunde, ein Verfahren bereitzustellen, mit dem auf eine einfache und präzise Weise das Aufwickeln und Zusammenspleißen eines Kernprofiles erfo lgt.

Gelöst wird die Aufgabe durch ein Verfahren zum Aufwickeln und Spleißen eines Kernprofiles für einen Fahrzeugreifen mit einer Wickeltrommel, mit folgenden Schritten:
- Zuführten eines endlosen Materialstreifens auf einem Zuführtisch,
- Greifen des vorderen freien Endes des Materialstreifens mit einem ersten Greifmittel
- das erste Greifmittel verfahren und das freie Ende des Materialstreifens auf der Wickeltrommel fixieren
- Rotation der Wickeltrommel zum Aufwickeln des Materialstreifens
- Fixieren des hinteren Endes des Materialstreifens mit einem ersten Fixiermittel
   vor und einem zweiten Fixiermittel nach der abzutrennenden Schnittfläche im Materialstreifen auf dem Zuführtisch
- Durchtrennen des Materialstreifens mit einem Schneidmittel, wobei die Länge des abzutrennenden Materialstreifens im Wesentlichen dem Umfang der Wickeltrommel entspricht
- Zusammensetzen der beiden freien Enden des Materialstreifens auf der Wickeltrommel
- und Zusammenspleißen der beiden freien Enden des Materialstreifens auf der Wickeltrommel zu einem geschlossenen Ring,
wobei das erste Fixiermittel ein zweites Greifmittel ist, welches nach dem Greifen das hintere Ende des Materialstreifens synchron mit der Umfangsgeschwindigkeit der Wickeltrommel verfährt und vor dem Zusammenspleißen auf der Wickeltrommel mit dem vorderen Ende des Materialstreifens zusammensetzt,
wobei das erste und zweite Greifmittel an einem Verfahrmittel angeordnet sind und
wobei das zweite Fixiermittel ein im Zuführtisch angeordneter Sauger oder Niederhalter ist.

Ein Vorteil der Erfindung ist insbesondere darin zu sehen, dass durch das erfindungsgemäße Verfahren das Aufwickeln und Zusammenspleißen des Materialstreifens auf eine einfache und präzise Weise erfolgt. Vor dem Ablängen des Materialstreifens wird dieser am hinteren Ende auf beiden Seiten der durchzutrennenden Schnittfläche fest fixiert und erst dann durchtrennt. Dadurch wird jede unkontrollierte Längen- und Formänderung des Materialstreifens bzw. Kernprofiles nach dem Abschneiden verhindert. Anschließend wird das hintere Ende des Materialstreifens mit dem ersten Fixiermittel gegriffen und kontrolliert mit dem vorderen Ende des Materialstreifens auf der Wickeltrommel zusammengesetzt. Auf diese Weise erhält man einen Verbindungsspleiß mit einer hohen Fertigungsqualität. Ferner wird ein Materialausschuss beim Herstellen von Kernprofilen für Fahrzeugreifen erheblich reduziert.

Bei der Erfindung ist vorgesehen, dass das erste Fixiermittel ein zweites Greifmittel ist, welches das hintere Ende des Materialstreifens vor dem Zusammenspleißen auf der Wickeltrommel mit dem vorderen Ende des Materialstreifens zusammensetzt. Das erste Fixiermittel hat somit sowohl die Funktion das hintere Ende des Materialstreifens auf dem Zuführtisch zu fixieren sowie das hintere Ende des Materialstreifens auf der Wickeltrommel zu positionieren.

Weiterhin ist bei der Erfindung vorgesehen, dass das erste und zweite Greifmittel an einem Verfahrmittel angeordnet sind. Dadurch kann auf ein zweites Verfahrmittel verzichtet werden.

In einer vorteilhaften Weiterbildung der Erfindung ist vorgesehen, dass die Greifmittel Nadel- oder Vakuumgreifer sind. Diese Art von Greifmitteln lassen sich auf einfache und effektive Weise an dem Verfahrmittel anordnen.

Außerdem ist bei der Erfindung vorgesehen, dass das zweite Fixiermittel ein im Zuführtisch angeordneter Sauger oder Niederhalter ist. Dadurch wird das hintere Ende des Materialstreifens effektiv fixiert, so dass hinterher der Materialstreifen präzise durchtrennt werden kann.

In einer weiteren vorteilhaften Weiterbildung der Erfindung ist vorgesehen, dass eine Vorschubrolle den Materialstreifen zur Wickeltrommel hin fördert, wobei die Vorschubrolle zur Reduktion von Materialspannungen synchron zur Umfangsgeschwindigkeit der Wickeltrommel rotiert. Auf diese Weise wird verhindert, dass der Materialstreifen unkontrollierte Längenänderungen erfährt.

In einer weiteren vorteilhaften Weiterbildung der Erfindung ist vorgesehen, dass das Durchtrennen des Materialstreifens mit einem beheizten, doppelt schräg gestellten Quetschmesser erfolgt. Dadurch wird eine optimale Schnittfläche im Materialstreifen erzeugt, wodurch ein Verbindungsspleiß mit einer hohen Qualität erreicht wird.

In einer weiteren vorteilhaften Weiterbildung der Erfindung ist vorgesehen, dass das Durchtrennen des Materialstreifens mit einem Hochgeschwindigkeits-Schneidverfahren erfolgt. Auf diese Weise wird die Taktzeit des Fertigungsverfahrens effektiv erhöht.

In einer weiteren vorteilhaften Weiterbildung der Erfindung ist vorgesehen, dass nach dem Zusammensetzen des Spleisses der Spleiss mit einer lamellierten Spleissrolle verdichtet wird. Die Spleißrolle besteht aus einer Vielzahl nebeneinander liegenden kreisförmigen Scheiben, die beweglich um die Rollenachse angeordnet sind. Bei Zusammenspleißen können dadurch Unebenheiten im Verbindungsspleiß ausgeglichen werden.

Anhand eines Ausführungsbeispiels soll die Erfindung näher erläutert werden. Es zeigen:
- Fig. 1: zeigt ein Kernprofil mit einem anliegenden Wulstkern in der Seitenansicht,
- Fig. 2: zeigt die Grundstellung des erfindungsgemäßen Verfahrens,
- Fig. 3 bis Fig. 6: Verfahrensschritte 1 bis 4,
- Fig. 7: Vorrichtung zur Durchführung des Verfahrens

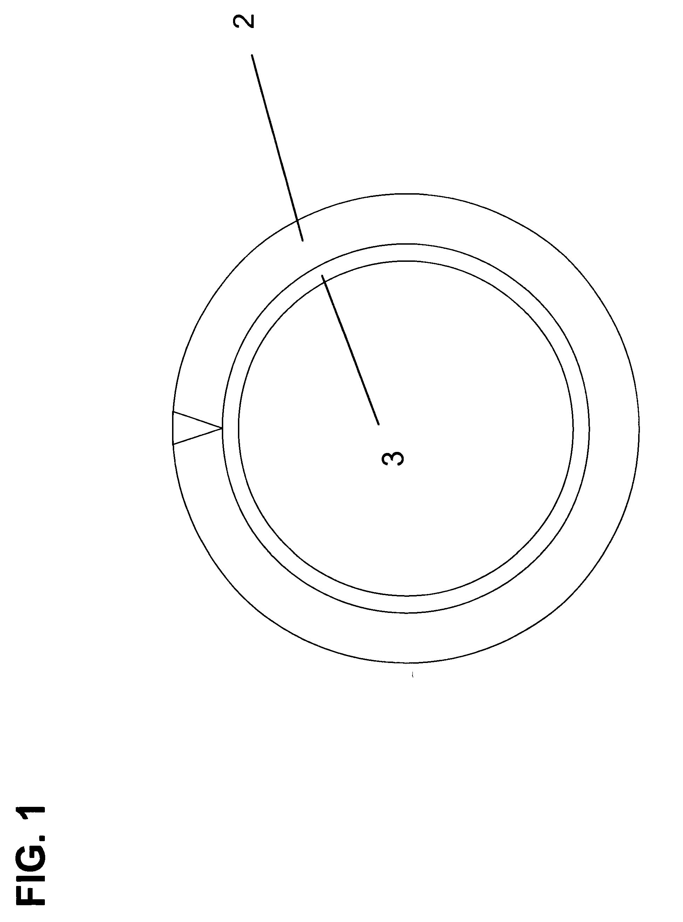

Die Figur 1 zeigt das Kernprofil 2 mit dem anliegenden Wulstkern 3 in der Seitenansicht. Der in der Figur dargestellte V-Ausschnitt wurde bei einem herkömmlichen Herstellungsverfahren manuell geschlossen und sodann gespleißt.

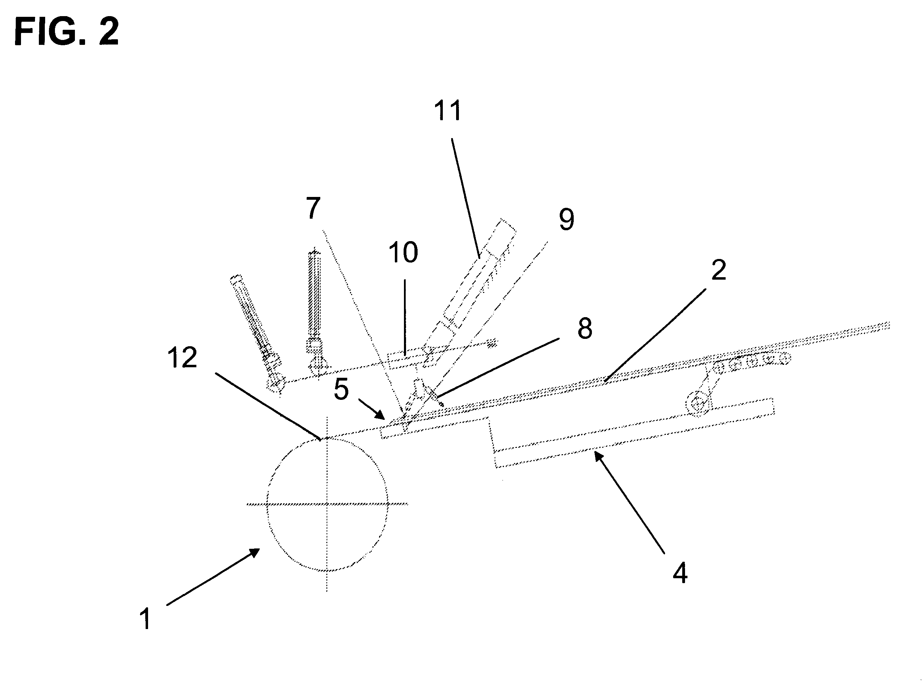

Die Figur 2 zeigt das erfindungsgemäße Verfahren in seiner Grundstellung. Der endlose Materialstreifen 2 in Form eines Kernprofils liegt auf dem Zuführtisch 4 auf und wird dort durch das erste Greifmittel 7 in Form eines Nadelgreifers gehalten.

In der Wickeltrommel 1 ist ein Vakuumsauger 12 angeordnet, der das freie Ende 5 des Materialstreifens 2 aufnehmen soll.

Das erste Greifmittel 7 ist an dem Verfahrmittel 10 angeordnet, welches sich zwischen Wickeltrommel 1 und Zuführtisch 4 hin- und herbewegen kann. Das Schneidmittel 11 ist zum Ablängen des Materialstreifens 2 vorgesehen. Im Zuführtisch 4 ist ein Vakuumsauger 9 angeordnet, der in der gezeigten Grundstellung ausgeschaltet ist.

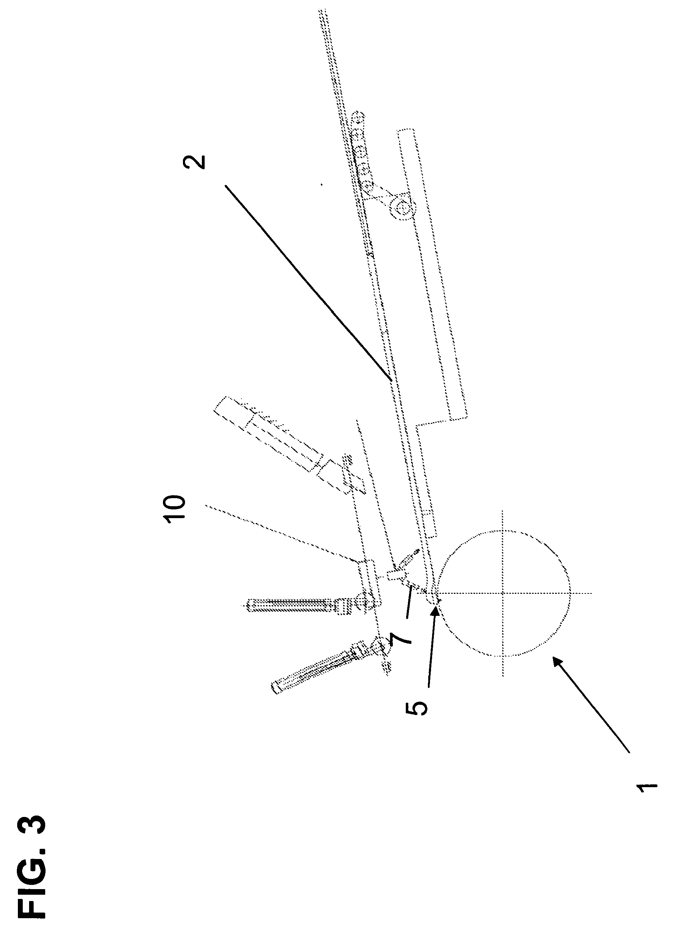

Die Fig. 3 zeigt den ersten Verfahrensschritt. Das erste Greifmittel 7 in Form eines Nadelgreifers hat das vordere Ende des Materialstreifens gegriffen und mit dem Verfahrmittel 10 auf der Wickeltrommel 1 positioniert. Anschließend lässt das erste Greifmittel 7 das vordere Ende 5 des Materialstreifens 2 los und positioniert diesen auf der Wickeltrommel 1.

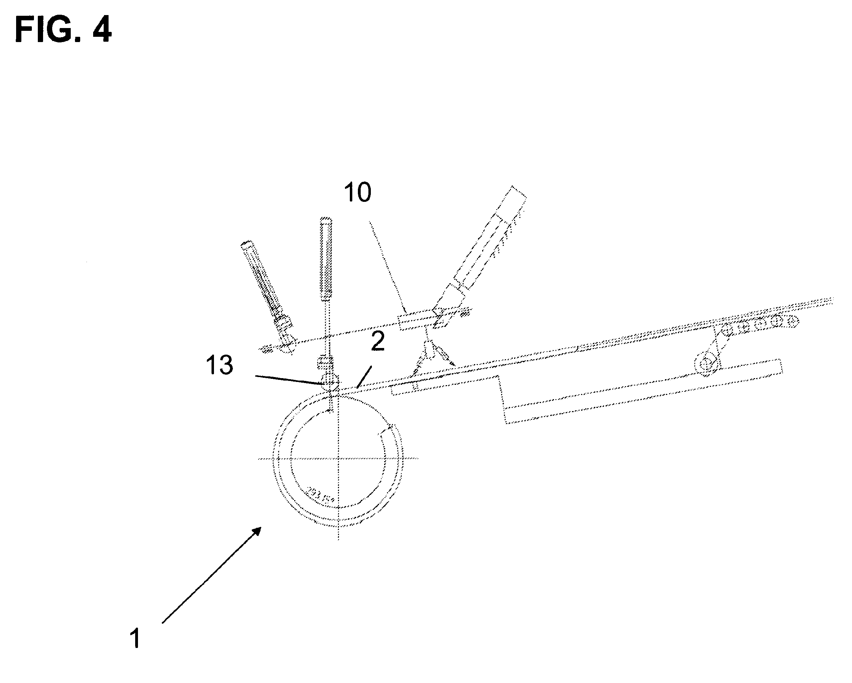

Fig. 4 zeigt den zweiten Verfahrensschritt. Der Materialstreifen 2 wird auf der Wickeltrommel 1 aufgewickelt, wobei dieser Wickelvorgang über die Rolle 13 unterstützt wird. Währenddessen fährt das Verfahrmittel 10 in die Grundstellung zurück. Nach dem die Wickeltrommel 1 eine Umdrehung von etwa 300° vollzogen hat, wird der Wickelprozess unterbrochen.

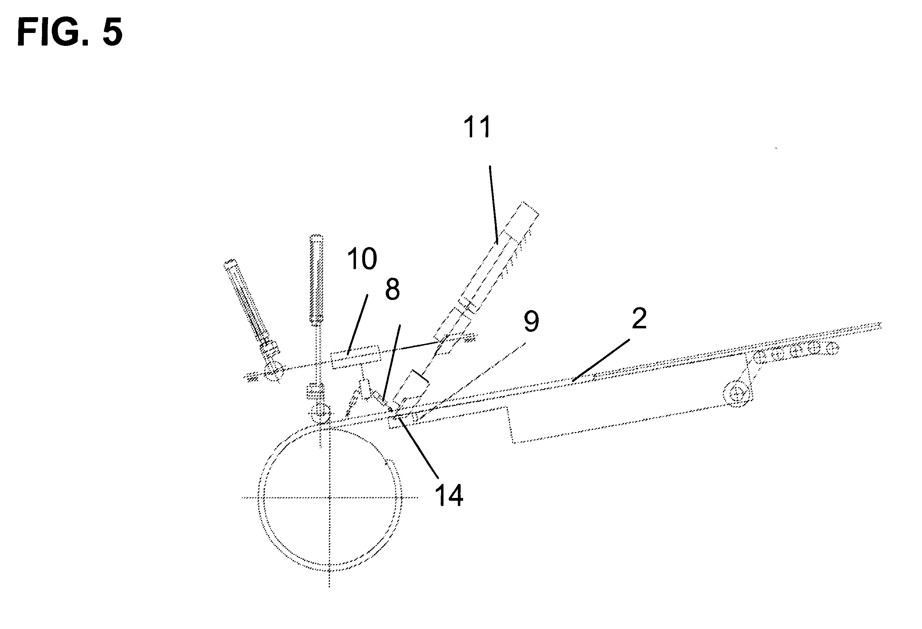

Fig. 5 zeigt den dritten Verfahrensschritt. Das erste Fixiermittel 8, welches ebenfalls an dem Verfahrmittel 10 angeordnet ist, greift den Materialstreifen 2 vor der Schnittfläche 14. Der Vakuumsauger 9, der das zweite Fixiermittel darstellt, fixiert den Materialstreifen 2 hinter der Schnittfläche 14. Der Materialstreifen 2 wird also vor und hinter der Schnittfläche 14 fest fixiert. Anschließend wird der Materialstreifen 2 mit dem Schneidmittel 11 abgelängt.

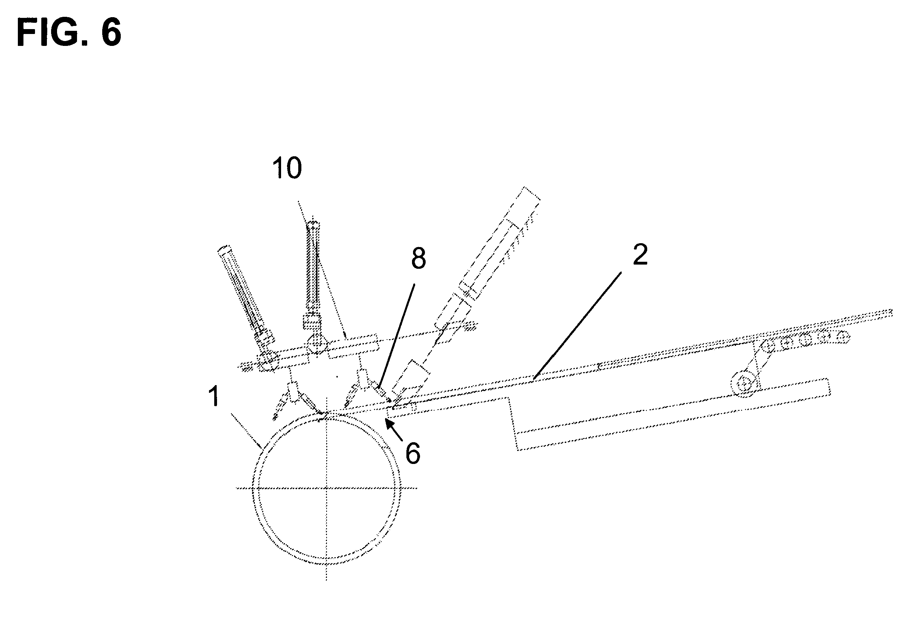

Fig. 6 zeigt den vierten Verfahrensschritt. Das hintere freie Ende 6 des Materialstreifens 2 wird mit dem ersten Fixiermittel 8 angehoben. Anschließend wird das Reststück des Materialstreifens 2 auf der Wickeltrommel 1 aufgewickelt, in dem die Wickeltrommel 1 sich dreht und das Verfahrmittel 10 synchron zu dieser Drehbewegung nachgeführt wird. Das hintere freie Ende 6 des Materialstreifens 2 wird sodann auf der Trommel 1 abgesetzt. Das hintere freie Ende 6 liegt somit direkt an dem vorderen freien Ende 5 des Materialstreifens 2 an und wird dann mit einer lamellierten Spleißrolle zusammen gespleißt. Anschließend wird der Materialstreifen 2 in Form eines Kernprofiles mit nicht dargestellten Klappsegmenten aufgerichtet. Nach diesem Prozessschritt fahren alle Bauteile in die Grundstellung zurück und der Vorgang beginnt von neuem.

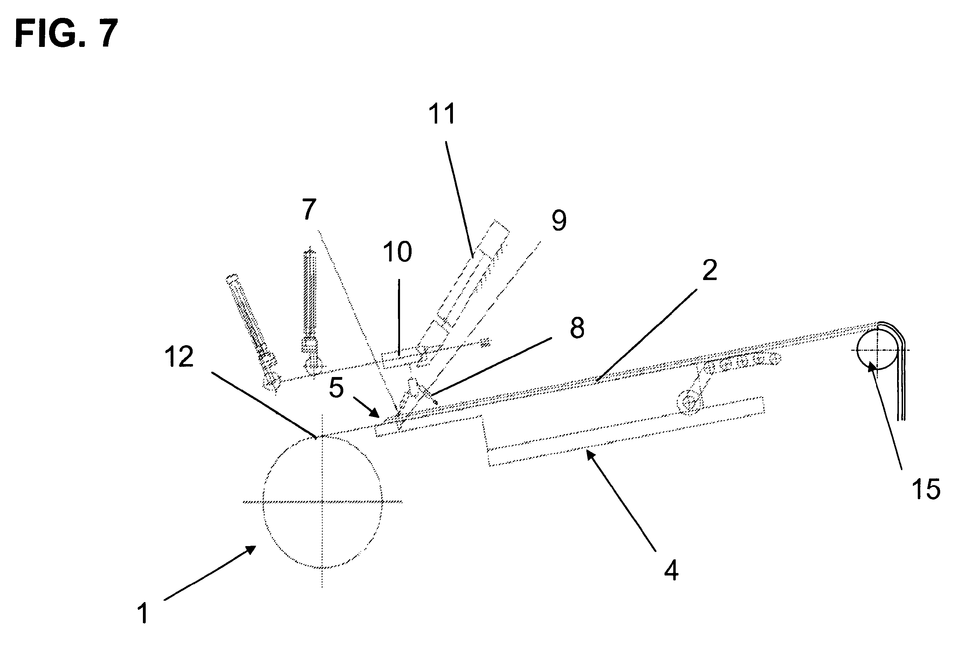

Fig. 7 zeigt die Vorrichtung zur Durchführung des erfindungsgemäßen Verfahrens. In dieser Ansicht ist die Wickeltrommel 1, das Verfahrmittel 10, das Schneidmittel 11, das zweite Fixiermittel 9 in Form eines Vakuumsaugers sowie die Vorschubrolle 15 dargestellt. Das Verfahrmittel 10 kann zwischen der Wickeltrommel 1 und dem Zuführtisch 10 linear hin- und herbewegt werden. Die Vorschubrolle 15 unterstützt die Förderbewegung des nicht dargestellten Materialstreifens zur Wickeltrommel 1.

### Bezugszeichenliste

### (ist Teil der Beschreibung)

- 1: Wickeltrommel
- 2: Kernprofil bzw. Materialstreifen
- 3: Wulstkern
- 4: Zuführtsich
- 5: vorderes freies Ende des Materialstreifens
- 6: hinteres freies Ende des Materialstreifens
- 7: erstes Greifmittel in Form eines Nadelgreifers
- 8: erstes Fixiermittel in Form eines Vakuumsaugers
- 9: zweites Fixiermittel in Form eines Vakuumsaugers
- 10: Verfahrmittel
- 11: Schneidmittel
- 12: Vakuumsauger in der Wickeltrommel
- 13: Rolle
- 14: Schnittfläche
- 15: Vorschubrolle

## Patentansprüche

1. Verfahren zum Aufwickeln und Spleißen eines Kernprofiles (2) für einen Fahrzeugreifen mit einer Wickeltrommel (1), mit folgenden Schritten:
- Zuführen eines endlosen Materialstreifens (2) auf einem Zuführtisch (4),
- Greifen des vorderen freien Endes (5) des Materialstreifens (2) mit einem ersten Greifmittel (7)
- das erste Greifmittel (7) verfahren und das freie Ende (5) des Materialstreifens (2) auf der Wickeltrommel (1) fixieren
- Rotation der Wickeltrommel (1) zum Aufwickeln des Materialstreifens (2)
- Fixieren des hinteren Endes (6) des Materialstreifens (2) mit einem ersten Fixiermittel (8) vor und einem zweiten Fixiermittel (9) nach der abzutrennenden Schnittfläche (14) im Materialstreifen (2) auf dem Zuführtisch (4),
- Durchtrennen des Materialstreifens (2) mit einem Schneidmittel (11), wobei die Länge des abzutrennenden Materialstreifens (2) im Wesentlichen dem Umfang der Wickeltrommel (1) entspricht
- Zusammensetzen der beiden freien Enden (5, 6) des Materialstreifens (2) auf der Wickeltrommel (1).
- und Zusammenspleißen der beiden freien Enden (5, 6) des Materialstreifens auf der Wickeltrommel (1) zu einem geschlossenen Ring,
wobei das erste Fixiermittel (8) ein zweites Greifmittel ist, welches nach dem Greifen das hintere Ende (6) des Materialstreifens (2) synchron mit der Umfangsgeschwindigkeit der Wickeltrommel (1) verfährt und vor dem Zusammenspleißen auf der Wickeltrommel (1) mit dem vorderen Ende (5) des Materialstreifens (2) zusammensetzt,
wobei das erste und zweite Greifmittel (7, 8) an einem Verfahrmittel (10) angeordnet sind und
wobei das zweite Fixiermittel (9) ein im Zuführtisch (4) angeordneter Sauger oder Niederhalter ist.

2. Verfahren nach einem der vorhergehenden Ansprüche ,
**dadurch gekennzeichnet, dass**
die Greifmittel (7, 8) Nadel- oder Vakuumgreifer sind.

3. Verfahren nach einem der vorhergehenden Ansprüche,
**dadurch gekennzeichnet, dass**
eine Vorschubrolle (15) den Materialstreifen (2) zur Wickeltrommel (1) hin fördert, wobei die Vorschubrolle (15) zur Reduktion von Materialspannungen synchron zur Umfangsgeschwindigkeit der Wickeltrommel rotiert.

4. Verfahren nach einem der vorhergehenden Ansprüche,
**dadurch gekennzeichnet, dass**
das Durchtrennen des Materialstreifens (2) mit einem beheizten, doppelt schräg gestellten Quetschmesser (11) erfolgt.

5. Verfahren nach einem der vorhergehenden Ansprüche,
**dadurch gekennzeichnet, dass**
das Durchtrennen des Materialstreifens (2) mit einem Hochgeschwindigkeits-Schneidverfahren erfolgt.

6. Verfahren nach einem der vorhergehenden Ansprüche,
**dadurch gekennzeichnet, dass**
nach dem Zusammensetzen des Spleisses der Spleiss mit einer lamellierten Spleissrolle verdichtet wird.

## Claims

1. Method for winding and splicing a core profile (2) for a vehicle tyre by means of a winding drum (1), with the following steps:
- feeding an endless material strip (2) on a feed table (4),
- gripping the front free end (5) of the material strip (2) by a first gripping means (7),
- moving the first gripping means (7) and fixing the free end (5) of the material strip (2) on the winding drum (1),
- rotating the winding drum (1) for winding the material strip (2),
- fixing the rear end (6) of the material strip (2) with a first fixing means (8) in front of and by a second fixing means (9) behind the cut surface (14) to be separated in the material strip (2) on the feed table (4),
- severing the material strip (2) by a cutting means (11), the length of the material strip (2) to be separated correspondingly essentially to the circumference of the winding drum (1),
- joining the two free ends (5, 6) of the material strip (2) together on the winding drum (1),
- and splicing the two free ends (5, 6) of the material strip together on the winding drum (1) to form a closed ring,
the first fixing means (8) being a second gripping means which, after gripping the rear end (6) of the material strip (2), moves synchronously with the circumferential speed of the winding drum (1) and, before splicing together on the winding drum (1), joints together with the front end (5) of the material strip (2),
the first and second gripping means (7, 8) being arranged on the movement means (10), and
the second fixing means (9) being a sucker or holding-down device arranged in the feed table (4).

2. Method according to one of the preceding claims, **characterized in that** the gripping means (7,8) are needle or vacuum grippers.

3. Method according to one of the preceding claims, **characterized in that** an advancing roller (15) conveys the material strip (2) towards the winding drum (1), the advancing roller (15) rotating synchronously with the circumferential speed of the winding drum for the purpose of the reduction of material stresses.

4. Method according to one of the preceding claims, **characterized in that** the material strip (2) is severed by means of a heated doubly oblique crushing knife (11).

5. Method according to one of the preceding claims, **characterized in that** the material strip (2) is severed by means of a high-speed cutting method.

6. Method according to one of the preceding claims, **characterized in that**, after the splice is joined together, it is compressed by means of a lamellar splicing roller.

## Revendications

1. Procédé pour enrouler et épisser un profilé de tringle (2) pour un pneumatique de véhicule, avec un tambour d'enroulement (1), comprenant les étapes suivantes :
- apport d'une bande de matériau sans fin (2) à une table d'alimentation (4),
- préhension de l'extrémité libre avant (5) de la bande de matériau (2) avec un premier moyen de préhension (7),
- déplacement du premier moyen de préhension (7) et fixation de l'extrémité libre (5) de la bande de matériau (2) sur le tambour d'enroulement (1),
- rotation du tambour d'enroulement (1) pour enrouler la bande de matériau (2),
- fixation de l'extrémité arrière (6) de la bande de matériau (2), avec un premier moyen de fixation (8) avant la surface de coupe (14) à sectionner et avec un deuxième moyen de fixation (9) après la surface de coupe (14) à sectionner, dans la bande de matériau (2) sur la table d'alimentation (4),
- découpage de la bande de matériau (2) avec un moyen de coupe (11), la longueur de la bande de matériau à sectionner (2) correspondant essentiellement au pourtour du tambour d'enroulement (1),
- assemblage des deux extrémités libres (5, 6) de la bande de matériau (2) sur le tambour d'enroulement (1),
- et épissage des deux extrémités libres (5, 6) de la bande de matériau sur le tambour d'enroulement (1) pour former une bague fermée,
le premier moyen de fixation (8) étant un deuxième moyen de préhension qui, après la préhension, déplace l'extrémité arrière (6) de la bande de matériau (2) de manière synchronisée avec la vitesse périphérique du tambour d'enroulement (1) et l'assemble à l'extrémité avant (5) de la bande de matériau (2) avant l'épissage sur le tambour d'enroulement (1),
le premier et le deuxième moyen de préhension (7, 8) étant disposés sur un moyen de déplacement (10) et
le deuxième moyen de fixation (9) étant un dispositif d'aspiration ou un dispositif de maintien disposé dans la table d'alimentation (4).

2. Procédé selon l'une quelconque des revendications précédentes,
**caractérisé en ce que**
les moyens de préhension (7, 8) sont des dispositifs de préhension à aiguilles ou à vide.

3. Procédé selon l'une quelconque des revendications précédentes,
**caractérisé en ce**
**qu'**un rouleau d'avance (15) transporte la bande de matériau (2) jusqu'au tambour d'enroulement (1), le rouleau d'avance (15) tournant de manière synchronisée avec la vitesse périphérique du tambour d'enroulement afin de réduire les tensions du matériau.

4. Procédé selon l'une quelconque des revendications précédentes,
**caractérisé en ce que**
le découpage de la bande de matériau (2) est effectué avec une lame de coupe transversale (11) chauffée, orientée avec une double oblicité.

5. Procédé selon l'une quelconque des revendications précédentes,
**caractérisé en ce que**
le découpage de la bande de matériau (2) est effectué avec un procédé de coupe à grande vitesse.

6. Procédé selon l'une quelconque des revendications précédentes,
**caractérisé en ce**
**qu'**après l'assemblage de l'épissure, l'épissure est condensée avec un rouleau d'épissage stratifié.
